Europäisches Patentamt

**European Patent Office**

Office européen des brevets

(19)

(11) Numéro de publication: **0 058 389**
**B1**

(12) **FASCICULE DE BREVET EUROPEEN**

(45) Date de publication du fascicule du brevet:
**03.07.85**

(51) Int. Cl.⁴: **H 01 S 3/03,** H 01 S 3/097

(21) Numéro de dépôt: **82100996.6**

(22) Date de dépôt: **11.02.82**

(54) Laser à gaz excité par décharge de condensateurs.

(30) Priorité: **16.02.81 FR 8102974**
**31.08.81 FR 8116542**

(43) Date de publication de la demande:
**25.08.82 Bulletin 82/34**

(45) Mention de la délivrance du brevet:
**03.07.85 Bulletin 85/27**

(84) Etats contractants désignés:
**BE CH DE FR GB IT LI NL SE**

(56) Documents cités:
**WO - A - 80/01439**
**FR - A - 2 144 141**
**FR - A - 2 182 732**
**FR - A - 2 356 297**

**REV. SCI. INSTRUM., vol.49, no.11, novembre 1978, New York (US) R. COISSON et al.: "Dynamic power supplies for TEA lasers".**
**IEEE JOURNAL OF QUANTUM ELECTRONICS, vol.QE-9, no.6, juin 1973, New York (US) T.S. FAHLEN et al.: "High-average-power xenon laser".**
**SOV. JOURNAL QUANTUM ELECTRONICS, vol.6, no.3, mars 1976, New York (US) YU. T. MAZURENKO et al.: "Mechanism of initiation of a homogeneous discharge in double-discharge CO2 lasers".**

(73) Titulaire: **COMPAGNIE GENERALE D'ELECTRICITE Société anonyme dite:, 54, rue La Boétie, F-75382 Paris Cedex 08 (FR)**

(72) Inventeur: **Lacour, Bernard, 17, rue des Cornutas, F-91460 Marcoussis (FR)**
Inventeur: **Maillet, Marc, 6, Square du Clos de Villaine, F-91300 Massy (FR)**
Inventeur: **De Witte, Olivier, 27, avenue des Roches, F-91190 Gif-sur-Yvette (FR)**
Inventeur: **Vannier, Chantal, 1, rue Gounod, F-91240 Saint Michel sur Orge (FR)**

(74) Mandataire: **Weinmiller, Jürgen et al, Zeppelinstrasse 63, D-8000 München 80 (DE)**

## Description

La présente invention concerne un laser à gaz excité par décharge de condensateurs.

On connaît un laser à gaz de ce type décrit dans le document FR-A 2 356 297 (Battelle Memorial Institute). Ce laser comporte notamment une cavité optique résonnante disposée suivant un axe et remplie d'un gaz actif, deux électrodes opposées, en contact avec le gaz actif, reliées entre elles par une inductance et disposées respectivement de part et d'autre de l'axe, deux condensateurs comportant chacun un élément diélectrique et deux armatures, chaque électrode constituant une armature d'un condensateur, et un circuit capable de charger les condensateurs. Les deux électrodes sont constituées par des plaques juxtaposées dont les bords délimitent avec les pièces diélectriques un canal laser disposé suivant l'axe et contenant le gaz actif. Ce laser est déclenché à l'aide d'un éclateur dont les électrodes sont reliées respectivement à l'une des plaques et à l'autre armature des condensateurs.

Un tel laser présente deux inconvénients principaux.

D'une part, on doit régler fréquemment la distance entre les électrodes de l'éclateur et même remplacer ces électrodes. Il en résulte dans tous les cas une mauvaise fiabilité et une faible durée de vie.

D'autre part le plasma qui s'établit dans l'éclateur à chaque tir laser s'éteint au bout d'un intervalle de temps relativement long: il est donc impossible d'atteindre des cadences de tir très élevées, ces cadences ne pouvant dépasser en pratique 10 à 50 kHz.

La présente invention a pour but de pallier ces inconvénients et de réaliser un laser à gaz excité par décharge de condensateurs capable de fonctionner à des cadences de tir plus élevées et présentant une plus grande fiabilité.

La présente invention a pour objet un laser à gaz excité par décharge de condensateurs, comportant

– une cavité optique résonnante disposée suivant un axe, cette cavité contenant un gaz actif laser,
– deux électrodes opposées, en contact avec le gaz actif, et disposées respectivement de part et d'autre dudit axe,
– deux condensateurs comportant chacun un élément diélectrique et deux armatures, chaque électrode constituant une armature d'un condensateur, les éléments diélectriques et les électrodes délimitant un canal laser disposé suivant ledit axe et contenant le gaz actif
– et un circuit de charge des condensateurs, caractérisé
– en ce qu'il comporte deux plaques métalliques comprenant chacune une partie médiane située entre deux parties entrêmes adjacentes, ces plaques étant disposées en regard l'une de l'autre, les parties médianes en contact avec le milieu actif formant les électrodes, les parties extrêmes formant les armatures des deux condensateurs branchés en parallèle
– et en ce que le circuit de charge comporte
  · un transformateur dont l'enroulement primaire est connecté en série avec une capacité et dont les extrémités de l'enroulement secondaire sont connectées respectivement aux deux plaques,
  · une source de courant électrique pour charger la capacité,
  · et des moyens pour commander la décharge de la capacité dans l'enroulement primaire, de façon à créer dans l'enroulement secondaire un courant induit capable de charger les condensateurs, afin d'établir une décharge électrique entre les électrodes, cette décharge excitant le milieu actif gazeux pour former un faisceau laser.

Des formes particulières d'exécution de l'objet de la présente invention sont décrites ci-dessous, à titre d'exemple, en référence aux dessins annexés dans lesquels

– la figure 1 représente schématiquement un premier mode de réalisation du laser selon l'invention, le corps du laser étant illustré en coupe transversale,
– la figure 2 est une vue en coupe longitudinale du corps du laser suivant un plan II-II de la figure 1,
– la figure 3 représente un deuxième mode de réalisation du laser selon l'invention, le corps du laser étant illustré en coupe transversale
– et la figure 4 est une vue en coupe longitudinale de ce corps de laser suivant un plan IV-IV de la figure 3.

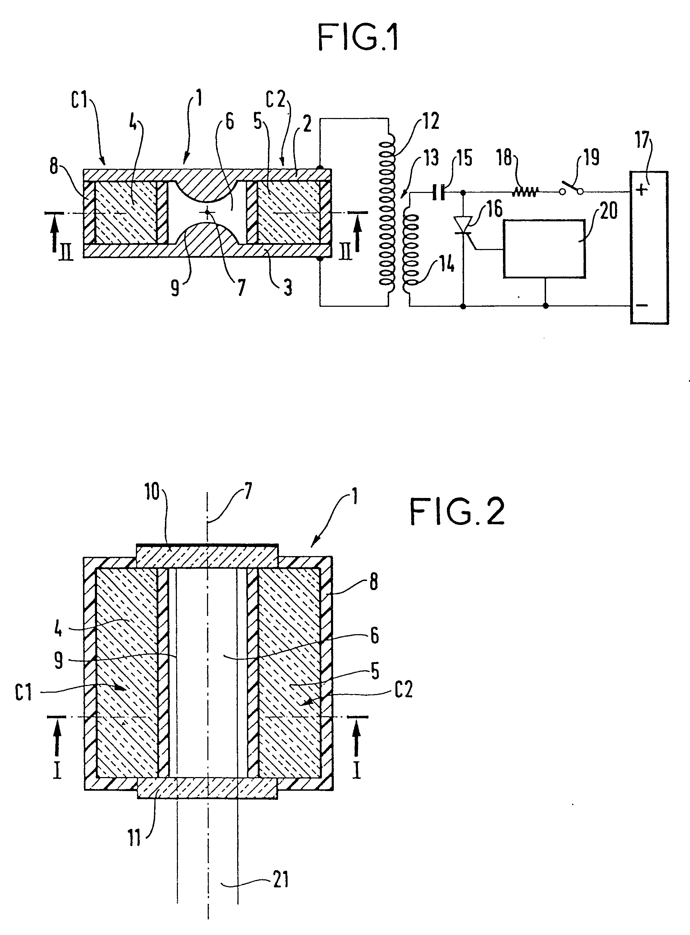

Sur la figure 1, un corps de laser 1, représenté en coupe suivant un plan I-I de la figure 2, comporte deux plaques métalliques rectangulaires 2 et 3, en acier, parallèles entre elles et en regard l'une de l'autre.

Entre les plaques 2 et 3 sont fixés deux éléments diélectriques 4 et 5 de forme parallélépipédique. Les éléments 4 et 5 sont disposés parallèlement entre eux et espacés l'un de l'autre de façon à ménager entre ces éléments un canal longitudinal 6 d'axe 7, perpendiculaire au plan de la figure 1. Les éléments 4 et 5 sont de préférence constitués par des blocs d'une céramique ferroélectrique de constante diélectrique élevée telle que le titanate de baryum.

La surface extérieure des éléments 4 et 5 qui n'est pas en contact avec les plaques 2 et 3 est recouverte d'une couche de résine époxy 8. Les plaques 2 et 3 forment donc les armatures de deux condensateurs $C_1$ et $C_2$ branchés en parallèle, ces condensateurs ayant pour diélectriques les pièces 4 et 5.

Les parties médianes des plaques 2 et 3, qui ne sont pas en contact avec les blocs 4 et 5, comportent chacune une proéminence arrondie 9 suivant une surface cylindrique parallèle à l'axe 7. Ces proéminences s'avancent dans le corps du canal 6 de façon à former les bords de deux électrodes en regard l'une de l'autre.

Une cavité optique résonnante est disposée suivant l'axe 7. Comme il est visible sur la figure 2, cette cavité peut comporter deux miroirs 10 et 11 fixés par collage aux deux extrémités du canal 6 de façon à l'obturer. Le miroir 10 est un miroir totalement réfléchissant et le miroir 11 un miroir partiellement transparent au rayonnement laser.

Les deux extrémités de l'enroulement secondaire 12 d'un transformateur 13 sont connectées respectivement aux deux plaques métalliques 2 et 3. Une extrémité de l'enroulement primaire 14 du transformateur 13 est connectée à une armature d'une capacité 15 dont l'autre armature est connectée à l'anode d'un thyristor 16, la cathode du thyristor 16 étant connectée à l'autre extrémité de l'enroulement 14. La jonction entre la capacité 15 et le thyristor 16 est connectée au pôle positif d'un générateur de courant électrique 17, à travers une résistance de charge 18 et un interrupteur 19. Le pôle négatif du générateur 17 est connecté à la cathode du thyristor 16. Les deux sorties d'un circuit de commande 20 sont reliées respectivement à la cathode et à l'électrode de commande du thyristor 16.

Le laser décrit ci-dessus et illustré par les figures 1 et 2 fonctionne de la manière suivante.

Le volume interne du canal 6 est rempli d'un gaz actif laser qui est dans l'ensemble illustré un mélange d'azote et d'hexafluorure de soufre $SF_6$, mais peut être aussi un mélange d'halogènes et de gaz rares.

Le thyristor 16 n'étant pas rendu conducteur, on charge la capacité 15 par fermeture de l'interrupteur 19. Puis on déclenche la décharge de la capacité 15 dans l'enroulement 14, en rendant conducteur le thyristor 16 par commande du circuit 20. Cette décharge provoque la formation, dans l'enroulement secondaire 12 du transformateur 13, d'une tension induite qui charge les deux condensateurs $C_1$ et $C_2$ du corps de laser 1 branchés en parallèle.

Dès que la tension entre les plaques 2 et 3 atteint la tension d'amorçage entre les électrodes 9 du laser, une décharge s'établit entre ces électrodes, de façon à provoquer la formation d'un rayonnement laser oscillant dans le canal 6, ce rayonnement donnant naissance à une impulsion laser 21 sortant du miroir 11.

A titre indicatif, la capacité 15 peut être chargée à une tension comprise entre 100 et 500 volts, la charge des deux condensateurs du laser s'effectuant au bout d'un intervalle de temps de l'ordre de 0,1 à 10 microsecondes après la commande de décharge de la capacité 15. Le réglage de la proportion de $SF_6$ (qui est d'environ 1%) dans le gaz laser, permet de faire varier la tension d'amorçage de la décharge entre les électrodes: la tension d'amorçage est d'autant plus élevée que la proportion de $SF_6$ est grande. La décharge des condensateurs $C_1$ et $C_2$ s'effectue en un temps très bref (environ une nanoseconde).

Il est ainsi possible d'effectuer des tirs laser à une cadence très élevée, supérieure à 100 kHz.

Dans ce cas il est nécessaire de prévoir une circulation du gaz actif dans le canal 6 à l'aide d'un système connu, non représenté.

Le laser illustré par les figures 1 et 2 présente une excellente fiabilité et une grande durée de vie, puisque l'organe provoquant la décharge de la capacité 15 dans l'enroulement 14 est un redresseur commandable à semi-conducteur qui n'est soumis pratiquement à aucune usure. Le thyristor 16 peut être remplacé par un transistor ou un transistor à effet de champ ce qui permet d'augmenter encore la cadence de fonctionnement du laser.

On constate que le rendement du laser (énergie du faisceau laserénergie stockée dans les condensateurs $C_1$ et $C_2$) est fortement augmenté. On a pu mesurer un rendement supérieur à 2‰, l'énergie stockée dans les condensateurs étant de 40 mJ et l'énergie du faisceau laser de 100 microjoules.

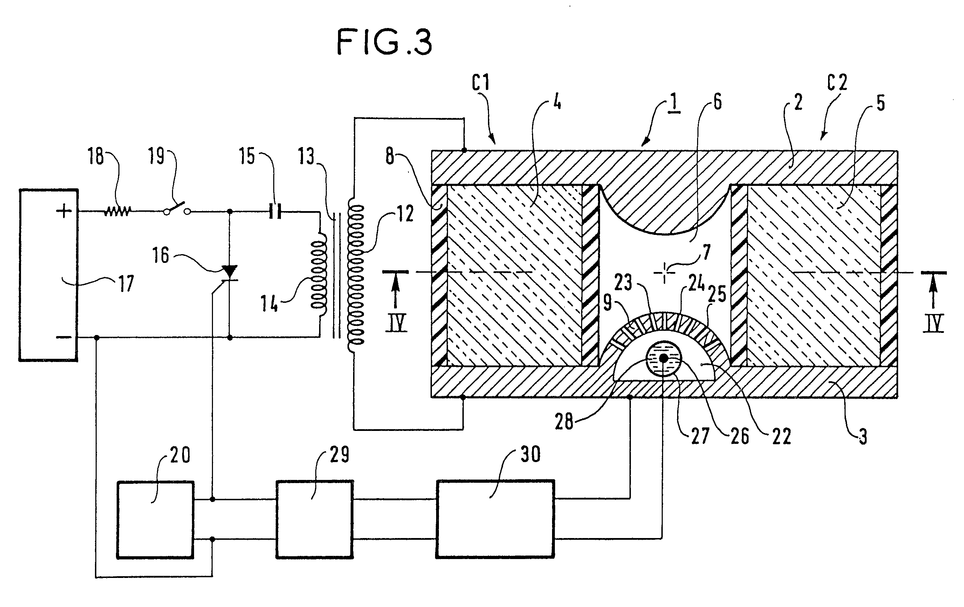

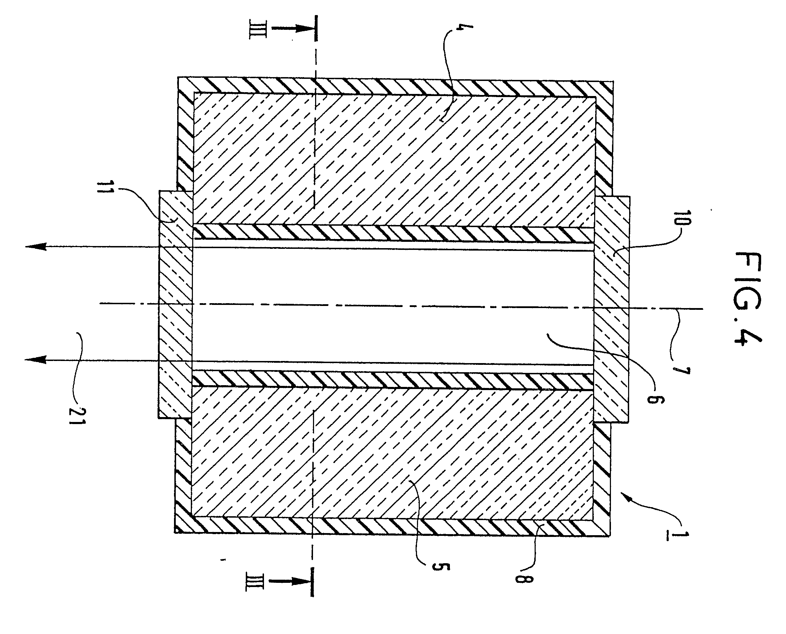

Les figures 3 et 4 montrent un autre mode de réalisation du laser selon l'invention, comportant des éléments analogues à ceux du laser illustré par les figures 1 et 2, ces éléments étant repérés par les mêmes références.

Sur la figure 3, un corps de laser 1, représenté en coupe suivant un plan III-III de la figure 4, comporte deux plaques métalliques rectangulaires 2 et 3 en acier, sensiblement parallèles entre elles et en regard l'une de l'autre.

Entre les plaques 2 et 3 sont fixés deux éléments diélectriques 4 et 5 de forme parallélépipédique. Les éléments 4 et 5 sont espacés l'un de l'autre de façon à ménager entre eux un canal longitudinal 6 d'axe 7 perpendiculaire au plan de la figure 3. Les éléments 4 et 5 sont de préférence constitués par des blocs d'une céramique ferroélectrique de constante diélectrique élevée, telle que le titanate de baryum. La surface extérieure des éléments 4 et 5 qui n'est pas en contact avec les plaques 2 et 3 est recouverte par une couche de résine époxy 8. Les plaques 2 et 3 forment les armatures de deux condensateurs $C_1$ et $C_2$ branchés en parallèle, ces condensateurs ayant pour diélectriques les éléments 4 et 5.

Les parties médianes des plaques 2 et 3 qui ne sont pas en contact avec les blocs 4 et 5 comportent chacune une proéminence arrondie telle que 9. Ces proéminences s'avancent dans le volume du canal 6 suivant des surfaces cylindriques dont les axes sont parallèles à l'axe 7, de façon à former les bords de deux électrodes en regard l'une de l'autre.

Une de ces électrodes présente un évidement intérieur 22 et la proéminence 9 de cette électrode comporte une pluralité d'ouvertures telles que 23, 24, 25 sur toute sa surface. Ces ouvertures font communiquer le volume du canal 6 avec celui de l'évidement 22.

A l'intérieur de l'évidement 22 est disposé un conducteur isolé constitué par un fil de nickel 26 disposé à l'intérieur d'un tube en verre 27 qui contient en outre une solution conductrice 28.

Une cavité optique résonnante est disposée suivant l'axe 7. Cette cavité comporte deux miroirs 10 et 11 (figure 4) fixés par collage aux deux extrémités du canal 6 de façon à l'obturer. Le miroir 10 est totalement réfléchissant et le miroir 11 partiellement transparent au rayonnement laser.

Les deux extrémités de l'enroulement secondaire 12 d'un transformateur 13 sont connectées respectivement aux deux plaques métalliques 2 et 3. Une extrémité de l'enroulement primaire 14 du transformateur 13 est connectée à une armature d'une capacité 15 dont l'autre armature est connectée à l'anode d'un thyristor 16, la cathode du thyristor 16 étant connectée à l'autre extrémité de l'enroulement 14. La jonction entre la capacité 15 et le thyristor 16 est connectée au pôle positif d'un générateur de courant électrique continu 17, à travers une résistance de charge 18 et un interrupteur 19. Le pôle négatif du générateur 17 est connecté à la cathode du thyristor 16.

Les deux sorties d'un circuit de commande 20 sont reliées, d'une part respectivement à l'électrode de commande du thyristor 16 et au pôle négatif du générateur 17, et d'autre part à l'entrée d'un circuit de retard 29. La sortie du circuit 29 est connectée à l'entrée d'un générateur 30 d'impulsions haute tension dont les sorties sont respectivement connectées au fil 26 et à la plaque 3.

Le laser décrit ci-dessus et illustré par les figures 3 et 4 fonctionne de la manière suivante.

Le volume interne du canal 6 est rempli d'un gaz actif laser qui peut être par exemple de l'azote.

Le thyristor 16 n'étant pas conducteur, on charge la capacité 15 par fermeture de l'interrupteur 19. Puis on déclenche la décharge de la capacité 15 dans l'enroulement 14 en actionnant le circuit 20 qui rend conducteur le thyristor 16. Cette décharge provoque la formation, dans l'enroulement secondaire 12 du transformateur 13, d'une tension induite qui charge progressivement les deux condensateurs en parallèle $C_1$ et $C_2$.

La commande du circuit 20 déclenche aussi une impulsion haute tension délivrée par le générateur 30, au bout d'un intervalle de temps déterminé par le circuit de retard 29. On règle le retard du circuit 29 de façon que l'impulsion haute tension soit délivrée avant que la tension de charge des condensateurs $C_1$ et $C_2$ n'atteigne la tension d'amorçage entre les électrodes du laser.

Dès que l'impulsion haute tension est délivrée, une effluve en couronne se forme autour du tube isolant 27 entourant le conducteur 26. Cette effluve provoque immédiatement, par ionisation du gaz actif, une décharge électrique entre les deux électrodes du laser. Sous l'effet de cette décharge, un rayonnement laser oscille entre les deux miroirs 10 et 11 de la cavité, ce rayonnement donnant naissance à une impulsion laser 21 sortant du miroir 11.

En pratique on règle le retard du circuit 29 de façon que l'effluve en couronne se produise pour une tension prédéterminée de charge des condensateurs, un peu inférieure à la tension d'amorçage. Mais il y a lieu de noter que cette tension prédéterminée n'est pas critique, et que la décharge électrique déclenchée par l'effluve peut être obtenue pour une tension prédéterminée cinq fois plus faible que la tension d'amorçage.

Cette décharge électrique est particulièrement stable et homogène et s'effectue à tension constante. Par rapport au laser (illustré par les figures 1 et 2), le laser représenté sur les figures 3 et 4 présente l'avantage d'avoir un rendement énergétique augmenté dans une rapport qui peut être de l'ordre de 5 à 10. De plus, on observe une meilleure stabilité de l'énergie laser, une meilleure précision temporelle de déclenchement des impulsions laser et une réduction importante du niveau des parasites radioélectriques émis.

Bien entendu, le fil conducteur isolé peut non seulement être disposé à l'intérieur d'une électrode creuse en forme de grille comme c'est le cas dans l'exemple décrit, mais peut aussi être disposé plus simplement dans le canal laser à proximité d'une électrode, parallèlement à l'axe du canal.

De plus le gaz actif laser peut être constitué d'un mélange d'halogènes et de gaz rares, afin de réaliser des lasers à excimères.

Enfin, il est possible de prévoir une circulation du gaz actif dans le canal à l'aide d'un système connu, principalement dans le cas où on désire obtenir des impulsions laser à une cadence de répétition élevée.

Le laser selon l'invention peut être utilisé pour exciter des lasers à colorants.

**Revendications**

1. Laser à gaz excité par décharge de condensateurs, comportant
- une cavité optique résonnante (6) disposée suivant un axe (7) et contenant un gaz actif laser,
- deux électrodes opposées (2, 3), en contact avec le gaz actif, et disposées respectivement de part et d'autre dudit axe,
- deux condensateurs ($C_1$, $C_2$) comportant chacun un élément diélectrique (4, 5) et deux armatures (2, 3), chaque électrode constituant une armature d'un condensateur, les éléments diélectriques et les électrodes délimitant un canal laser disposé suivant ledit axe et contenant le gaz actif
- et un circuit de charge des condensateurs, caractérisé
- en ce qu'il comporte deux plaques métalliques (2, 3) comprenant chacune une partie médiane située entre deux parties extrêmes adjacentes, ces plaques étant disposées en regard l'une de l'autre, les parties médianes en contact avec le milieu actif formant les électrodes, les parties extrêmes formant les armatures des deux condensateurs ($C_1$, $C_2$) branchés en parallèle
- et en ce que le circuit de charge comporte
· un transformateur (13) dont l'enroulement primaire (14) est connecté en série avec une capacité (15) et dont les extrémités de l'enroulement secondaire (12) sont connectées respectivement aux deux plaques (2, 3),
· des moyens (17) pour charger la capacité (15),

· un redresseur commandable (16) à semi-conducteur connecté à la capacité (15) et à l'enroulement primaire (14)
· et un circuit de commande (20) du redresseur (16) pour décharger la capacité (15) dans l'enroulement primaire (14) du transformateur (13).

2. Laser à gaz selon la revendication 1, caractérisé en ce que les parties médianes formant les électrodes comportent chacune une proéminence arrondie (9) s'avançant dans le volume du canal (6).

3. Laser à gaz selon la revendication 1, caractérisé en ce que les éléments diélectriques (4, 5) sont des céramiques ferroélectriques.

4. Laser à gaz selon la revendication 1, caractérisé en ce que la cavité optique résonnante comporte deux miroirs (10, 11) fixés aux deux extrémités du canal (6).

5. Laser à gaz selon la revendication 1, caractérisé en ce que le gaz actif laser est un mélange d'azote et d'hexafluorure de soufre.

6. Laser à gaz selon la revendication 1, caractérisé en ce qu'il comporte en outre
– un conducteur isolé (26 à 28) disposé dans le gaz actif parallèlement à l'axe (7), à proximité d'une électrode,
– un générateur (30) d'impulsions électriques à haute tension, dont les deux bornes sont reliées respectivement au conducteur (26) et à l'électrode située à proximité du conducteur
– et un circuit de retard (29) connecté à l'entrée du générateur (30) et au circuit de commande (20), le retard étant prédéterminé pour que le générateur (30) délivre une impulsion avant que la tension de charge des condensateurs $(C_1, C_2)$ n'atteigne la tension d'amorçage entre les électrodes, cette impulsion créant autour de l'isolant (27) du conducteur une effluve en couronne apte à déclencher la décharge électrique entre les électrodes.

7. Laser à gaz selon la revendication 6, caractérisé en ce que au moins une électrode comporte une proéminence arrondie (9) s'avançant dans le volume du canal (6).

8. Laser selon la revendication 7, caractérisé en ce que
– l'électrode comportant une proéminence (9) présente un évidement intérieur (22),
– la proéminence comporte une pluralité d'ouvertures (23 à 25) mettant en communication le volume du canal (6) et celui de l'évidement (22)
– et que le conducteur isolé (26 à 28) est logé dans l'évidement (22).

**Patentansprüche**

1. Durch Entladung von Kondensatoren angeregter Gaslaser, mit
– einem optischen Resonanzhohlraum (6), der entlang einer Achse (7) angeordnet ist und ein aktives Lasergas enthält,
– zwei einander gegenüberliegenden Elektroden (2, 3), die mit dem aktiven Gas in Kontakt stehen und zu beiden Seiten der Achse angeordnet sind,
– zwei Kondensatoren $(C_1, C_2)$, die je ein dielektrisches Element (4, 5) und zwei Armaturen (2, 3) aufweisen, wobei jede Elektrode eine Armatur eines Kondensators darstellt und die dielektrischen Elemente und die Elektroden einen Laserkanal begrenzen, der entlang der Achse angeordnet ist und das aktive Gas enthält,

– und einem Ladekreis für die Kondensatoren, dadurch gekennzeichnet, dass
– er zwei Metallplatten (2, 3) aufweist, die je einen Mittelteil aufweisen, der zwischen zwei daran angrenzenden Endteilen angeordnet ist, wobei diese Platten einander gegenüber angeordnet sind und die mit dem aktiven Milieu in Kontakt stehenden Mittelteile die Elektroden und die Endteile die Armaturen der beiden parallelgeschalteten Kondensatoren $(C_1, C_2)$ bilden,
– und dadurch, dass der Ladekreis aufweist
· einen Transformator (13), dessen Primärwicklung (14) mit einem Kondensator (15) in Reihe verbunden ist und dessen Sekundärwicklungsanschlüsse je mit einer der beiden Platten (2, 3) verbunden sind,
· Mittel (17), um den Kondensator (15) zu laden,
· einen steuerbaren Halbleiter-Gleichrichter (16), der mit dem Kondensator (15) und der Primärwicklung (14) verbunden ist,
· und einen Steuerkreis (20) für den Gleichrichter (16), um den Kondensator (15) in die Primärwicklung (14) des Transformators (13) zu entladen.

2. Gaslaser nach Anspruch 1, dadurch gekennzeichnet, dass die die Elektroden bildenden Mittelteile je einen abgerundeten Vorsprung (9) aufweisen, der in das Volumen des Kanals (6) hineinreicht.

3. Gaslaser nach Anspruch 1, dadurch gekennzeichnet, dass die die elektrischen Elemente (4, 5) ferroelektrische Keramiksubstanzen sind.

4. Gaslaser nach Anspruch 1, dadurch gekennzeichnet, dass der optische Resonanzhohlraum zwei Spiegel (10, 11) aufweist, die an den beiden Enden des Kanals (6) befestigt sind.

5. Gaslaser nach Anspruch 1, dadurch gekennzeichnet, dass das aktive Lasergas eine Mischung aus Stickstoff und Schwefelhexafluorid ist.

6. Gaslaser nach Anspruch 1, dadurch gekennzeichnet, dass er weiter aufweist
– einen isolierten Leiter (26 bis 28), der im aktiven Gas parallel zur Achse (7) in der Nähe einer Elektrode angeordnet ist,
– einen Generator (30) für elektrische Hochspannungsimpulse, dessen beide Klemmen mit dem Leiter (26) bzw. der in der Nähe des Leiters befindlichen Elektrode verbunden sind,
– und einen Verzögerungskreis (29), der mit dem Eingang des Generators und dem Steuerkreis (20) verbunden ist, wobei die Verzögerung so vorbestimmt ist, dass der Generator (30) einen Impuls liefert, ehe die Ladespannung der Kondensatoren $(C_1, C_2)$ die Zündspannung zwischen den Elektroden erreicht, wobei dieser Impuls um die Isolierung (27) des Leiters eine Koronaentladung bewirkt, die die elektrische Entladung zwischen den Elektroden auslösen kann.

7. Gaslaser nach Anspruch 6, dadurch gekennzeichnet, dass mindestens eine Elektrode einen abgerundeten Vorsprung (9) aufweist, der in das Volumen des Kanals (6) hineinragt.

8. Laser nach Anspruch 7, dadurch gekennzeichnet, dass
– die einen Vorsprung (9) aufweisende Elektrode eine innere Aushöhlung (22) aufweist,
– der Vorsprung eine Vielzahl von Öffnungen (23 bis 25) aufweist, die das Volumen des Kanals (6) mit dem der Aushöhlung (22) in Verbindung setzen,
– und dass der isolierte Leiter (26 bis 28) in der Aushöhlung (22) angeordnet ist.

## Claims

1. A gas laser in which the gas is excited by discharges from capacitors, said laser comprising:
– an optical resonant cavity (6) disposed along an axis (7) and containing an active laser gas,
– two opposite electrodes (2, 3) in contact with the active gas and disposed one on either side of said axis,
– two capacitors ($C_1$, $C_2$) each having a dielectric member (4, 5) and two plates (2, 3), each electrode constituting one plate of a capacitor, the dielectric members and the electrodes delimiting a laser channel disposed along said axis and containing the active gas,
– and a capacitor charging circuit, characterized in that
– the laser includes two metal plates (2, 3) each having a middle portion located adjacent to two end parts, these plates being disposed facing each other, their middle portions being in contact with the active medium and forming the electrodes, the end parts forming the plates of the two parallel-connected capacitors ($C_1$, $C_2$),
– and in that the charging circuit comprises:
• a transformer (13) whose primary winding (14) is connected in series with a capacitor (15) and whose secondary winding (12) ends are connected to the two plates (2, 3) respectively,
• means (17) for charging the capacitor (15),
• a controllable semiconductor rectifier (16) connected to the capacitor (15) and to the primary winding (14)

• and a control circuit (20) for the rectifier (16) in view of the discharge of the capacitor (15) into the primary winding (14) of the transformer (13).

2. A gas laser according to claim 1, characterized in that middle portions which form the electrodes each have a rounded protruding part (9) which extends into the volume of the channel (6).

3. A gas laser according to claim 1, characterized in that the dielectric members (4, 5) are ferroelectric ceramic components.

4. A gas laser according to claim 1, characterized in that the optical resonant cavity has two mirrors (10, 11) fixed one to each end of the channel (6).

5. A gas laser according to claim 1, characterized in that the active laser gas is a mixture of nitrogen and of sulphur hexafluoride.

6. A gas laser according to claim 1, characterized in that it further includes:
– an insulated conductor (26 to 28) disposed parallel to the axis (7) in the active gas and near an electrode,
– a generator (30) of high-voltage electric pulses, the terminals of which are connected to the conductor (26) and to the electrode located near the conductor respectively,
– and a delay circuit (29) connected to the input of the generator (30) and to the control circuit (20), the delay being predetermined so that said generator (30) delivers a pulse before the charging voltage of the capacitors ($C_1$, $C_2$) reaches the voltage at which priming occurs between the electrodes, said pulse setting up a corona discharge around the insulator (27) of the conductor which corona discharge is able to trigger the electric discharge between the electrodes.

7. A gas laser according to claim 6, characterized in that at least one electrode has a rounded protruding part (9) which extends into the channel volume (6).

8. A laser according to claim 7, characterized in that
– the electrode which has a protruding part (9) is hollow inside (22),
– the protruding part has a plurality of openings (23 to 25) through which the channel volume (6) communicates with the hollow part (22),
– and that the insulated conductor (26 to 28) is housed in the hollow part (22).

0 058 389

# FIG.1

# FIG.2

7

# FIG.3

# FIG.4